(19)

Europäisches
Patentamt
European
Patent Office
Office européen
des brevets

(11) **EP 3 595 240 A1**

(12) **EUROPEAN PATENT APPLICATION**

(43) Date of publication:
**15.01.2020 Bulletin 2020/03**

(51) Int Cl.:
*H04L 9/32* (2006.01)          *H04L 29/08* (2006.01)
*G06Q 20/06* (2012.01)        *G06Q 20/40* (2012.01)

(21) Application number: **18183407.8**

(22) Date of filing: **13.07.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Tuncer, Kevin Kei**
**52477 Alsdorf (DE)**

(72) Inventor: **Tuncer, Kevin Kei**
**52477 Alsdorf (DE)**

(74) Representative: **LifeTech IP**
**Spies & Behrndt Patentanwälte PartG mbB
Elsenheimerstraße 47a
80687 München (DE)**

(54) **DISTRIBUTED BLOCKCHAIN WITH DELAYED TRANSACTION**

(57)    A method for delaying a transaction to a recipient in a blockchain network may be provided. The blockchain network comprises a plurality of nodes for managing a distributed ledger for a crypto-currency. The method comprises also receiving a token and a time period value. The token represents an asset value transferrable from a sender identifiable by a sender identifier to the recipient identifiable by a receiver identifier. The method comprises additionally confirming a related asset value transfer by appending information about the asset value transfer as transaction information to a block in the blockchain network, denying the recipient's access to the transferred asset value by the recipient until the time period expires, and upon receiving a stop message within the time period defined by the time period value, permanently denying the recipient's access to the transferred asset value by the recipient.

100

102  receiving a token representing to an asset value in the crypto-currency and a time period value

104  confirming the asset value transfer in the blockchain network

106  denying access to the transferred asset value temporarily until the time period expires

108  receiving a stop message and denying access to the asset value permanently

110  granting access to the asset value to a third party

FIG. 1

EP 3 595 240 A1

**Description**

FIELD OF THE INVENTION

The invention relates generally to a method for delaying a transaction in a blockchain network, and more specifically, to a computer-implemented method for delaying a transaction to a recipient in a blockchain network. The invention relates further to a related system for delaying a transaction to a recipient in a blockchain network and a computer program product.

BACKGROUND

Recently, a lot of inventions have been made around blockchain-based crypto-currencies. Many initial coin offerings (ICO) have been made and collected large amounts of capital. Well-known examples are Bitcoin, Euthereum and Ripple. However, the market has seen hundreds of different crypto-currencies.

A series of different technology implementations for crypto-currencies are known. A crypto-currency relates to a decentralized payment system. Individual transactions may be stored in a blockchain - or better a plurality of identical blockchains on different nodes of a blockchain network - and managed, confirmed and secured by the blockchain network. A confirmation of a transaction is typically enabled through a cryptographic method and a consensus in the blockchain network. Several different methods for a decentralized consensus approach are known. The blocks of the blockchain comprise stored records of a cryptographic method. In a fully functioning crypto-currency technology, these records and/or blocks cannot be changed; the blockchain can only be extended. New transactions are collected and would be stored in a new block that is extending the blockchain. By using a defined sequencing of the blocks, which may have assigned fixed numbers, denoted as block number, the sequence of blocks becomes reliably unchangeable. The computers in the blockchain networks or nodes, which are involved in the block generation and confirmation, are named miners.

Users of the crypto-currency may have a so-called wallet. Using this wallet, a user may see and control how many units of the crypto-currency he owns, and he may use for transactions.

Wallets are linked to recipient logical addresses. They may be the source and the destination of units of the crypto-currency in case of a transaction. The amount of crypto-currency units a user may access and use for a transaction is determined by adding all transactions that have been received by the specific wallet; all outgoing transactions are subtracted from this amount. The result is the amount of currency units a user of a wallet may have available. If the amount would be zero or negative, the user may not perform a planned transaction.

However, the current crypto-currency systems have also disadvantages. If a person living in one country, having a first jurisdiction, may order a service (or product) from a service provider in another country, having a second jurisdiction, it may create certain problems when paying with the crypto-currency being managed in a decentralized way.

In a classical payment system and in case of a dispute - e.g., upfront payment and the service have not been delivered - a neutral third party or a middleman needs to be involved in order to regulate the dispute. Typically, both parties trust such a third-party. That may be a court, a judiciary, a governmental trustee, an escrow service or any other public trustee. He/she may decide in case of disputes. This is a typical way to ensure customer rights.

However, using a crypto-currency such a third-party or trustee is not required at all. Transactions may be performed without any third party or middlemen. This may increase the risk for the buyer if he pays upfront and the service is not delivered. Because of the often implicate anonymity of senders and receivers in a decentralized blockchain-based crypto-currency system, the party not conforming to the agreement - i.e., not delivering the service - may not be made liable for failing to be in line with the original agreement - i.e., a certain amount of crypto-currency units against service delivery.

Some crypto-currencies also offer smart contracts. This can be seen as a sort of digital contract being based on if-then-conditions which may be executed automatically in case a predefined condition is fulfilled. However, also these smart contracts cannot automatically sort the trust problem in a decentralized crypto-currency system based on a decentralized ledger.

Thus, the anonymity, and with that the missing ability to make a payment receiver responsible for delivering his service is a known disadvantage of current crypto-currency systems. Thus, there is a need in the above sense.

SUMMARY

This need may be addressed by the here proposed computer-implemented method for delaying a transaction to a recipient in a blockchain network, a related system for delaying a transaction to a recipient in a blockchain network, and a computer program product, according to the independent claims.

According to one aspect of the present invention, a computer-implemented method for delaying a transaction to a recipient in a blockchain network may be provided. The blockchain network may comprise a plurality of nodes for managing a distributed ledger for a crypto-currency.

The method may comprise receiving a token and a time period value, wherein the token may represent an asset value transferrable in the crypto-currency from a sender identifiable by a sender identifier to a recipient identifiable by a receiver identifier and, confirming an asset value transfer relating to the token in the blockchain network by appending information about the asset value transfer as transaction information to a block in the blockchain network.

The method may also comprise denying the recipient's access to the transferred asset value by the recipient temporarily until the time period expires and, upon receiving a stop message within the time period defined by the time period value, the method may comprise denying the recipient's access to the transferred asset value by the recipient permanently.

According to another aspect of the present invention, a related system for delaying a transaction to a recipient in a blockchain network may be provided. The system may comprise a plurality of nodes building the blockchain network for managing a distributed ledger for a crypto-currency. Each of the plurality of nodes may comprise a central processing unit and a memory coupled to the central processing unit adapted for executing program instructions.

The system may further comprise a receiving unit adapted for receiving a token and a time period value, wherein the token may represent an asset value in the crypto-currency transferrable from a sender identifiable by a sender identifier to the recipient identifiable by a receiver identifier. The system may also comprise a confirmation unit adapted for confirming an asset value transfer relating to the token in the blockchain network by appending information about the asset value transfer as transaction information to a block in the blockchain network.

Additionally, the system may comprise a denying unit adapted for denying the recipient's access to the transferred asset value by the recipient temporarily until the time period expires. The denying unit may also be adapted for denying the recipient's access to the transferred asset value by the recipient permanently if a stop message is received within the time period defined by the time period value.

Furthermore, embodiments may take the form of a related computer program product, accessible from a computer-usable or computer-readable medium providing program code for use, by, or in connection, with a computer or any instruction execution system. For the purpose of this description, a computer-usable or computer-readable medium may be any apparatus that may contain means for storing, communicating, propagating or transporting the program for use, by, or in connection, with the instruction execution system, apparatus, or device.

The proposed computer-implemented method for delaying a transaction to a recipient in a blockchain network may offer multiple advantages and technical effects:

The problem of an anonymous payment method and service delivery in which a party ordering a service - or alternatively a product - is generally unknown (in a legal sense) to the party delivering the service, and vice versa, is addressed. This anonymity applies also to the payment in form of crypto-currency units, e.g., transferred as a token.

In today's systems, the ordering party may, or may not, pay for the received service (product) before the service delivery. Because of potentially different jurisdictions and the generally assumed anonymity of the trade partners, none of the two parties have any levers to punish the other party in case the other party does not deliver - in particular, either the crypto-currency or the service. Thus, if the ordering party receives the service but does not pay afterwards, the supplier of the service is delivering without getting his earned compensation, and the other way around.

The proposed concept allows a payment - in particular in form of a token - together with or time-wise, relatively close to the order. The service delivering party can now make his service available, but cannot - during the predefined time period - access the transferred amount of crypto-currency units. Only at the end of the time period, or later, the recipient (of the crypto-currency units) may access the transferred amount. As long as the time period has not expired, the sender may - after he has sent a token representing the crypto-currency value transfer - send a stop message. In that case, the recipient will not get access to the crypto-currency assets having currency value temporarily. Instead, the transferred crypto-currency units may be lost for him forever. The value may be made available to a third party automatically. Thus, neither the sender nor the recipient has access to the crypto-currency units.

Instead, an additional transaction may automatically be generated to transfer the crypto-currency units to a neutral third party. Alternatively, the asset value - i.e., the transferred token(s) - may be made available automatically and implicitly by the management system of the blockchain network to a third party, e.g., one or more of the miners. Thus, neither the sender nor the recipient may have an advantage if the sender sends the stop message.

The value may be transferred to parties operating the distributed ledger or the blockchain network or to other parties like content providers, open source communities or other groups neutral to the sender and the recipient.

This may allow the sender full control over the asset value unit he may have received his ordered service completely and without any limitations.

Additionally, the proposed concept may also be used for voting processes.

In the following, additional embodiments of the inventive concept - in particular of the method also applicable to the related system - will be described.

According to one optional embodiment, the method may also comprise, upon permanently denying the recipient's access to the transferred asset value by the recipient permanently, generating a new transaction granting access to the asset value to a third party identifiable by a third party identifier. Thus, neither one of the sender and the recipient may have access to the value asset on form of the token(s) if a stop message was sent by the sender. Alternatively, the asset value may be made available to the miner or other parties without an explicitly newly generated transaction using a token.

According to one advantageous embodiment of the method, the third party identifier may be a group of third party identifiers, and wherein the access may be granted according to members of the group, e.g., according to predefined rules to members of the group. The group may comprise primarily a neutral third party being independent of the sender and the recipient, and secondarily, for, e.g., a small percentage, the sender, and for another small percentage the recipient. However, also the neutral third party could be a group of neutral third parties. The predefined rules may comprise a split according to a fixed percentage of a value distribution according to rules - e.g., also dynamically generated rules, e.g., dependent on identities of the sender and the recipient.

Thus, a completely dynamic assignment of the assets may be enabled. In order not to undermine the general concept of the proposed idea, it would be advisable to only transfer back a small amount - e.g., in the range of about 5% - to the sender, so that he will not have a benefit of sending the stop message. Also, the recipient should not benefit from such a stop message; thus, a similar amount may be transferred to the recipient.

It may also be mentioned that in one specific embodiment, the complete crypto-currency value may be transferred back in a transaction from the recipient to the sender if a stop message has been received.

According to one optional embodiment, the method may also comprise receiving a service order by the recipient, wherein the service order relates to the token. Thus, an order for a service from the recipient may be generated in relationship to the token transfer from the sender to the recipient. The order and the token may be transmitted simultaneously - e.g., coupled to each other - from the sender to the recipient. Alternatively, the token may be transferred after a reception and confirmed delivery of the service, e.g., in electronic form, like, an access key to digital content, a computer game access, software access key, or similar.

According to one allowable embodiment of the method, the time period value may be set by the sender. This may not represent the most typical implementation of the proposed concept. However, it may enable implementation flexibility, in particular, in the case of a voting system.

According to another allowable embodiment of the method, the time period value may be set by the recipient. This may be a more reality-near implementation alternative. Typically, the recipient of the token may know when the service he intends to deliver should have reached the sender of the token, i.e., the ordering party. Thus, the recipient's time period definition may be set to a time value, such that the sender may have received his ordered goods or service for sure; because otherwise the sender may send the stop message and the recipient may not receive the token representing the asset value transfer.

In one further embodiment, the recipient may set a plurality of time period values as proposals and may link it to different prices to be paid for the service in crypto-currency units. In one example, the price may decrease, the lower the time period value is selected. The sender may choose from the proposed time periods.

Thus, according to one permissive embodiment, the method may also comprise transmitting a plurality of potential time period values from the recipient to the sender and selecting one of the plurality of potential time period values by the sender as the time period value. A fee may be related to the option to select from a plurality of time period for stop messages as well

According to another permissive embodiment, the method may also comprise transmitting a time period range value from the recipient to the sender, and selecting a time period value from within the time period range by the sender as the time period value. This way a recipient or service provider may provide a time period value from which the ordering person - i.e., the sender - may select one time period value. As an option, the sending the stop message may be related to a certain stop message fee. If the sender may have the option to select the stop message time period value, the fee may vary depending on the selected time period value. The fee may generally be transferred to a miner or a group of miners. Also other recipients for the fees are possible, e.g., the recipient.

According to one advantageous embodiment of the method, an end of the time period may be an absolute time value or a relative time value. The relative time value may start at, e.g., a sent time of the related token. As send times, different alternatives may be possible: e.g., the time the transaction was generated from the sender, the time it was recognized by the blockchain network or the time it was recorded in the blockchain.

Thus, also other relative orientation marks for a beginning of the time period may be chosen. These alternatives add implementation flexibility to the proposed method. The absolute time would ideally relate to a jointly used calendar/time system (e.g., 11:01:56pm CET, July 5th, 2021).

According to one additionally advantageous embodiment of the method, the relative time value may be measured in numbers of blocks in the blockchain network - in particular, added blocks and/or records in the distributed ledger in the blockchain network. This may assume an average time span for a creation of new blocks and/or records in the distributed ledger. Given known computing capacities or other known time periods required in the blockchain network, a typical time required to sort out the cryptographic problem as average time span may be available in the blockchain network. Future advances in computing power may also be anticipated.

However, it may also be possible to determine an absolute block number in the future until the stop message may be accepted resulting in a "no-access" by the recipient. Given an actually known block number and the average creation time of a new block, the future block number until a stop message may be accepted may be calculatable by calculating the total number of new blocks generated from a starting point and the duration of a time period by dividing the duration through the average time for a new block generation. One would get the number of new blocks which may be added to the actual block number. This way, a simple block number comparison may be sufficient in order to determine a stop message as "in-time" or too late.

If, e.g., 30 seconds may be required for generating a new block in the blockchain and the actual block number would be 12030, then a time period value of 4 hours would be caculatable by

$$4*60 \text{ [min]} / 0.5 \text{ [min]} = 480 \text{ blocks.}$$

Thus, the stop message would not be accepted after block number 12030 + 480 = 15010. Such an approach may also be a security measure against fraud because plausibility checks may be performed against potentially fraud related block numbers. It may also address the general problem that a 100% time synchronization among the nodes of the blockchain network may be difficult. Thus, sometimes it may be difficult to decide whether a stop message arrived in time or not. The counting of the blocks may circumvent this difficulty.

According to one additionally useful embodiment of the method, the stop message may also be recorded in the blockchain network. It may, in particular, become a record in the underlying blockchain. The stop message in the blockchain together with the underlying transaction from the sender to the recipient may make it clear that the recipient cannot access the originally transferred asset value from the sender to the recipient. A generation of a new transaction for transferring the asset value away from the recipient - because he is not allowed to access it - may be performed or not.

All access rights to assets continue to be managed and recorded within the blockchain. A wallet showing an amount of assets a user may have access to may also use the stop messages and not reflect the underlying transaction as an asset value belonging to that particular user. Storing the tie period together with the initial transaction may make it even easier to control such an asset value access.

It may also be the case that the stop message may only then be made part of the blockchain if the stop message may have been received in time, i.e., within the time period value.

In a similar way to additional method embodiments, there may also be a plurality of additional system embodiments which will briefly be mentioned in the following:

According to one additional embodiment, the system may also comprise a generator adapted for generating a new transaction granting a third party identifiable by a third party identifier access to the asset value if an access to the transferred asset value is denied permanently.

According to one additional embodiment of the system, the third party identifier may be a group of third party identifiers and the access may be granted according to predefined rules to members of the group.

According to one additional embodiment, the system may also comprise a reception unit adapted for receiving a service order relating to the receiver identifier, wherein the service order may relate to the token.

According to additional embodiments of the system, the time period value may be settable by a sender. Alternatively, the time period value may be settable by the recipient.

According to one additional embodiment, the system may also comprise a transmitter adapted for transmitting a plurality of potential time period values from the recipient to the sender and a selecting unit adapted for selecting one of the plurality of potential time period values as the time period value for the sender.

According to one additional embodiment, the system may also comprise a transmitter adapted for transmitting a time period range value from the recipient to the sender and a selecting unit adapted for selecting a time period value from within the time period range as the time period value for the sender.

According to one additional embodiment of the system, an end of the time period may be an absolute time value or a relative time value starting at a sent time of the related token. The relative time value may be measured in numbers of blocks of in the blockchain network.

According to one additional embodiment of the system, one of the members of the group may be the sender of the token and/or the recipient.

According to one additional embodiment of the system, the stop message may be also recordable in the blockchain network.

Furthermore, embodiments may take the form of a related computer program product, accessible from a computer-usable or computer-readable medium providing program code for use, by, or in connection, with a computer or any instruction execution system. For the purpose of this description, a computer-usable or computer-readable medium may be any apparatus that may contain means for storing, communicating, propagating or transporting the program for use, by, or in connection, with the instruction execution system, apparatus, or device.

## BRIEF DESCRIPTION OF THE SEVERAL VIEWS OF THE DRAWINGS

It should be noted that embodiments of the invention are described with reference to different subject-matters. In particular, some embodiments are described with reference to method type claims; whereas other embodiments are described with reference to apparatus type claims. However, a person skilled in the art will gather from the above and the following description that, unless otherwise notified, in addition to any combination of features belonging to one type of subject-matter, also any combination between features relating to different subject-matters, in particular, between features of the method type claims, and features of the apparatus type claims, is considered as to be disclosed within this document.

The aspects defined above, and further aspects of the present invention, are apparent from the examples of embodiments to be described hereinafter and are explained with reference to the examples of embodiments, but to which the invention is not limited.

Preferred embodiments of the invention will be described, by way of example only, and with reference to the following drawings:

Fig. 1 shows a block diagram of an embodiment of the inventive computer-implemented method for delaying a transaction to a recipient in a blockchain network.

Fig. 2 shows a block diagram of an embodiment of a last portion of a blockchain.

Fig. 3 shows a block diagram of the embodiment of the last portion of a blockchain according to Fig. 2 with a stop message.

Fig. 4 shows an exemplary order/payment/delivery process with a stop message.

Fig. 5 shows a block diagram of an embodiment in which the proposed concept is used as a voting system.

Fig. 6 shows an embodiment of the system for delaying a transaction to a recipient in a blockchain network.

Fig. 7 shows an embodiment of a computing system comprising the system for delaying a transaction to a recipient in a blockchain network at least in parts.

## DETAILED DESCRIPTION

In the context of this description, the following conventions, terms and/or expressions may be used:

The term 'transaction' may denote a safe and controlled exchange and recording of an electronic message. The electronic message may comprise an order or a financial transaction, e.g., a value transfer in a crypto-currency. According to computer science theories, each transaction must succeed or fail as a complete unit; it can never be only partially completed. Typically, a transaction may be related to a record in the ledger system, e.g., a distributed ledger.

The term 'blockchain' may denote a continuously growing list of records, combined in blocks, which are linked and secured using cryptography. Each block may, e.g., contain a cryptographic hash of the previous block, a timestamp, and transaction data. By design, a blockchain may be resistant to modification of the data. It may represent an open, distributed ledger that can record transactions between two parties efficiently and in a verifiable and permanent way. For use as a distributed ledger, a blockchain may typically be managed by a peer-to-peer network collectively adhering to a protocol for inter-node communication and validating new blocks. Once recorded, the data in any given block cannot be altered retroactively without alteration of all subsequent blocks, which requires consensus of the network majority.

Blockchains are secure by design and exemplify a distributed computing system with high Byzantine fault tolerance. Decentralized consensus has therefore been achieved with a blockchain. This may render blockchains potentially suitable for the recording of events, medical records, and other record management activities, such as identity management, transaction processing, documenting provenance, food traceability, voting, as well as an exchange of measurement data and/or actuator data in an industrial or Internet of Things network.

The term 'consensus' may generally denote a group-making decision process in which group members develop, and agree to support a decision in the best interest of the whole. In the context of blockchain it may denote, in particular, the way a transaction or a new entry in a blockchain is conformed and agreed on in a distributed manner. A consensus algorithm among the constituents of the blockchain network ensures the consistency of the distributed managed blockchains and, in particular, the addition of a new block to a blockchain. Different consensus algorithms are known, e.g., a proof-of-work algorithm or a proof-of-stake algorithm.

The term 'recipient' may denote here the receiver of a transaction originating from a sender. In particular, the recipient may receive the token representing an amount of crypto-currency units with which the sender pays for a service to be delivered by the recipient. Alternatively, the token may also represent a voting voice in a voting system.

The term 'blockchain network' may denote the sum of the above-mentioned nodes running copies of the blockchain management system in form of a distributed ledger. Typically, the nodes of the blockchain network are connected by means of the Internet.

The term 'node' may denote a computing system enabled to handle blockchain transactions. The nodes may be of various type and/or architecture and may run different operating systems. Their performance abilities to handle blockchain transaction, network bandwidth, storage and/or memory capacities and processing power may vary from node to node. Each node may store an individual copy of the blockchain.

The term 'verifying the transaction' may denote a conclusion of the transaction information in a block that is published to the network (after a transaction is broadcasted to the blockchain network). When that happens, it is said that the transaction has been mined at a depth of 1 block. With each subsequent block that is found, the number of the block depth is increased by one. To be secure against wrong bookings, a transaction should not be considered as confirmed until it is a certain number of blocks deep. It may also be noted that in blockchain technology, typically transactions do not expire.

The term 'distributed ledger' - also called a shared ledger, or distributed ledger technology, DLT) - may denote a consensus of replicated, shared, and synchronized digital data geographically spread across multiple sites, countries, or institutions. There is no central administrator or centralized data storage. A peer-to-peer network - e.g., in form of the Internet - may be required, as well as, a consensus algorithm to ensure a replication across the nodes. One form of distributed ledger design is the blockchain system, which may be either public or private.

The term 'crypto-currency' may represent a digital asset designed to work as a medium of exchange that uses strong cryptography to secure financial transactions, control the creation of additional units, and verify the transfer of assets. Crypto-currency may be a kind of digital currency, virtual currency or alternative currency. A crypto-currency may typically use a decentralized control as opposed to centralized electronic money and central banking systems. The decentralized control of each crypto-currency works through a distributed ledger technology, typically a blockchain that may serve as a public financial transaction database.

Examples of crypto-currencies are Bitcoins, Euthereum or Stratis.

The term 'token' may denote an information item with the meaning of units of a crypto-currency. Alternatively, the token may also be used for votes in a voting system. Hence, the term 'token' may denote a digital key (sequence of bits adhering a predefined rules). The token may comprise sub-tokens. The tokens may store information in encrypted form. In one example, a token may represent an asset value in the context of a specific blockchain network or blockchain management system. Thus, a token may represent one or more coins of the crypto-currency. However, integrated or encoded into the token may also be other values, e.g., a time period.

The term 'asset value' may denote coins in a crypto-currency. They may be stored and transferrable in form of tokens from one user to another user of the blockchain network. Asset values in crypto-currency may be exchanged into a real currency.

The term 'asset value transfer' may denote, in the context of this application, that a transfer of a crypto-currency is performed from one participant - e.g., the sender - presented by his identifier related to a crypto-currency wallet to another participant, represented by his respective identifier related to his respective crypto-currency wallet. After the transfer - also be denoted as transaction - the first participant may not access the asset - i.e., the crypto-currency units - any longer. Instead, the recipient or the above-mentioned other participant may, after the transfer, access the crypto-currency units. It may be mentioned that in the context of the here proposed concept, the recipient may only access the crypto-currency after a stop message has not been received by the end of the time period.

The term 'time period' may denote a term during which a recipient of a transaction may not have access to the content of the transaction, i.e., the token representing a value in a crypto-currency. During the time period, the recipient may be denied the access.

The term 'denying access' may denote technically that it may not be possible to access certain data, e.g., transaction data or the token in the related blockchain network.

The term 'stop message' may denote an electronic message enabled to deny the access to the transferred token, sent from the sender to the recipient, and it will never be possible for the recipient, even after the end of the time period.

The term 'absolute time' may denote a form in which the time period value is encoded. The absolute time may be a point in time in a continuously developing calendars/time system, e.g., 1:25:34 pm, July 4th, 2022.

The term 'relative time' may denote another form in which the time period value may be encoded. An example may be: 5 days or 5h of any other definite time value from a starting time point onwards. A starting point for the five days may be the time of a related transaction. Using the relative time or duration, the absolute end time of a time period may easily be calculated.

In the following, a detailed description of the figures will be given. All instructions in the figures are schematic. First, a block diagram of an embodiment of the inventive computer-implemented method for delaying a transaction to a recipient in a blockchain network is given. Afterwards, further embodiments, as well as embodiments of the system for delaying a transaction to a recipient in a blockchain network, will be described.

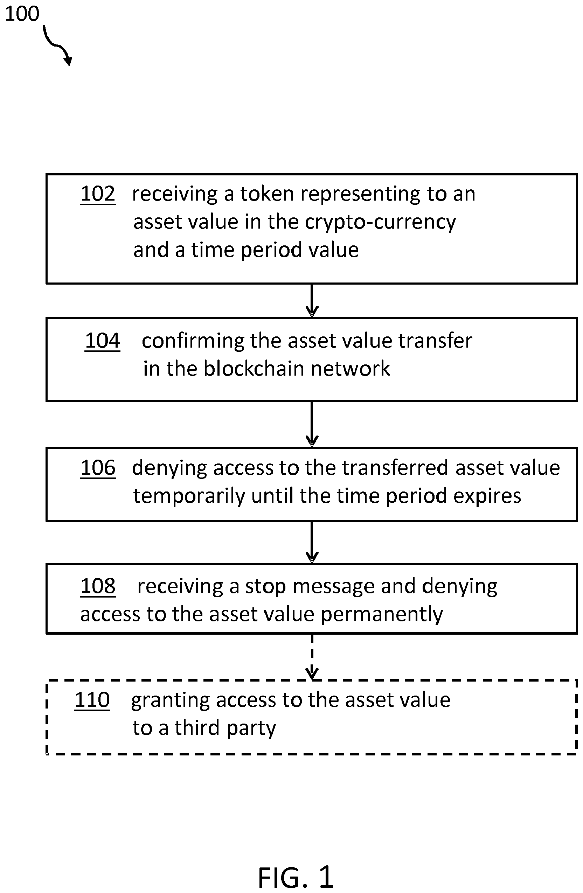

**Fig. 1** shows a block diagram of an embodiment of the computer-implemented method 100 for delaying a transaction to a recipient in a blockchain network - in particular a peer-to-peer network of computer nodes - in which the blockchain network comprises a plurality of nodes - in particular computing nodes, computers, or dedicated controllers - for managing a distributed ledger for a crypto-currency, in particular a cryptographically secured artificial currency. The method comprises receiving, 102, a token and a time period value. The token represents an asset value in the crypto-currency. The asset value may be transferrable by means of the token and may originate from a sender represented by a sender ID (identifier). The sender ID may be related to a wallet representing the total amount of crypto-currency units available to a sender user. The sender is identifiable by a sender ID, and the asset value transfer - in particular in form of the token representing crypto-currency units - is directed to the recipient identifiable by a receiver ID. Actually, the transfer is performed from the sender wallet to the receiver wallet using the blockchain network. It may be noted that token and time period value may be transmitted in a joint data structure, e.g., a joint token. Both may be transmitted in an encrypted form, either together or alone.

The method 100 also comprises confirming, 104, an asset value transfer relating to the token in the blockchain network by appending information about the asset value transfer as transaction information to a block - e.g., in form of appending the transaction record related to the asset value transfer to the last, open block of the blockchain. The distribution/replication of the transaction record in the blockchain network may be performed by broadcasting the transaction record to other members or nodes of the blockchain network for an inclusion into the distributed ledger by a known proof of stake or proof of work confirmation method which happens when a block is considered to be complete, when comprising a predetermined number of records or a given time passes by.

The method 100 additionally comprises denying, 106, access to the transferred asset value - in particular in form of the related crypto-currency units - by the recipient temporarily until the time period expires. And upon receiving, 108, a stop message - in particular generated by the sender and sent to the recipient, i.e., to the blockchain network/the distributed ledger- within the time period defined by the time period value, denying access to the transferred asset value by the recipient permanently.

Optionally, the method may also comprise generating, 110, a new transaction (or more) granting access to the asset value to a third party (or a group of 3rd parties) identifiable by a third party identifier. Thus, if the sender generates the stop message and transfers it to the recipient, the recipient cannot make use of the transferred crypto-currency units; instead, these transferred crypto-currency units are optionally transferred to another receiver, e.g., neutral to the sender and the receiver. This may be recorded in the blockchain or the blockchain management system may handle that separately. The stop message may also be recorded in the blockchain with a reference to the original transaction. The same applies to the time period.

Consequently, the sender will not get back his transferred crypto-currency units, but also the recipient will not be able to access the transferred crypto-currency units. The time period for the optional, second automatically generated transaction is set to zero time units, i.e., will be executed immediately, i.e., is has an immediate effect.

In case no automatically generated transaction will be generated, the blockchain management system may control a distribution of the asset value not accessible by the recipient using other method, e.g., may make it automatically available to a miner.

It may also be noted that access to the crypto-currency units is typically done using a so-called wallet in a way known to a skilled person.

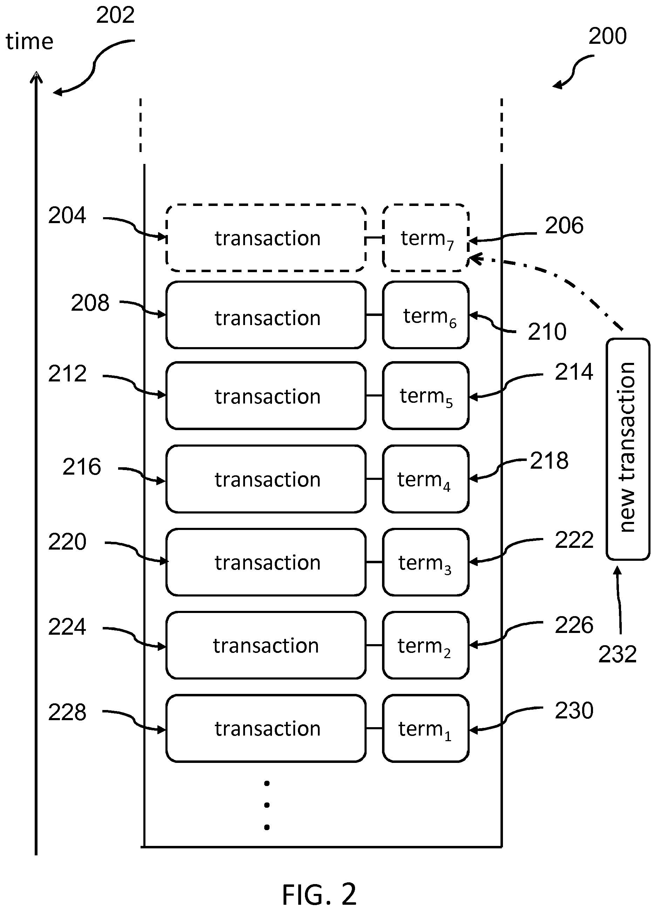

Fig. 2 shows a block diagram of an embodiment of a last portion, i.e., a last block 200 of a blockchain. The individual (older) blocks of the blockchain are not shown. However, a series of transactions - typically being represented by records - is shown. Exemplary, records 204, 208, 212, 216, 220, 224, 228 are shown. Typically, the records representing the transactions are sorted in a time-stamped way. The time is indicated by arrow 202. One may also grasp that a time period value 206, 210, 214, 218, 222, 226, 230 - in particular a time period value - is linked to a transaction. The terms relating to the time period values typically end at different points in time and may have, thus, different durations.

A new transaction 232 is logged as last item in the block 200 of the blockchain. As one can see, also the terms $_{1...7}$, i.e., time period values 206, ..., 230 are logged in the blockchain. The transactions typically have an ID. e.g., hash value or a static record number.

The recipient may not access the asset value related to the transaction until the term expires. If the term expires without receiving a stop message, the recipient will be able to access the crypto-currency units using his wallet in a known fashion.

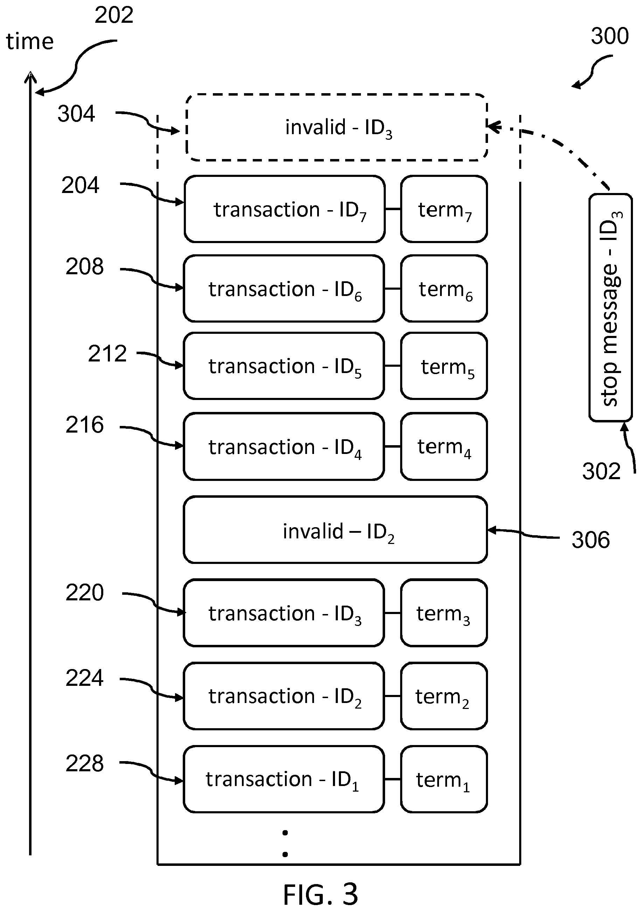

Fig. 3 shows a block diagram 300 of the embodiment of the last portion of a last block 200 of a blockchain according to Fig. 2 with a stop message 302 which will be appended to the last, open block 200 of the blockchain similar to any of the regular transactions indicated as invalid record 304 pointing to the transaction 220 with $ID_3$. In this figure, the transaction are shown with an individual ID ($ID_1$, $ID_2$, ..., $ID_7$). Furthermore, another invalid record 306 is shown - which has obviously been received between the transactions 220 and 216. This invalid record 306 points to the transaction 224 with $ID_2$.

Thus, the recipients of the transactions 224 / $ID_2$ and 220 / $ID_3$ cannot access the asset value represented in the corresponding record of the transactions. The stop messages relating to the invalid records 304, 306 integrated into the blockchain network - or more precisely, by a node of the blockchain network - indicate that the transaction of crypto-currency coins from the sender to the recipient shall not happen. The stop message 302 has to be received by the blockchain network within the term, i.e., before the time indicating the end of the time period. Otherwise it would be added as a recorded in the blockchain. It may also be noted that the function of the stop message - making the original relating transaction inaccessible by the recipient (temporarily or permanent) - also applied across blocks of the blockchain. Thus, a stop message may be recorded in a later block than the original relating transaction.

Thus, the stop message 302 will also be logged in the blockchain as an invalid record 304 undergoing the consensus algorithm of the block is complete like any other transaction. The stop message in the blockchain comprises also a reference to the original transaction, e.g., transaction 224, 220. When determining the total asset value a user can access using his wallet, the information of the invalid records will also be considered and the asset value from the originating transaction will prevented from being added to the total amount a user may access if an invalid record exists.

Alternatively, and according to another embodiment, as a reaction to the receiving of the stop message 302, a new transaction (not shown) is generated automatically for immediate validity by the distributed ledger for the benefit of the third-party (or 3rd party group). Consequently, the third-party may access the crypto-currency units using its wallet in a usual way.

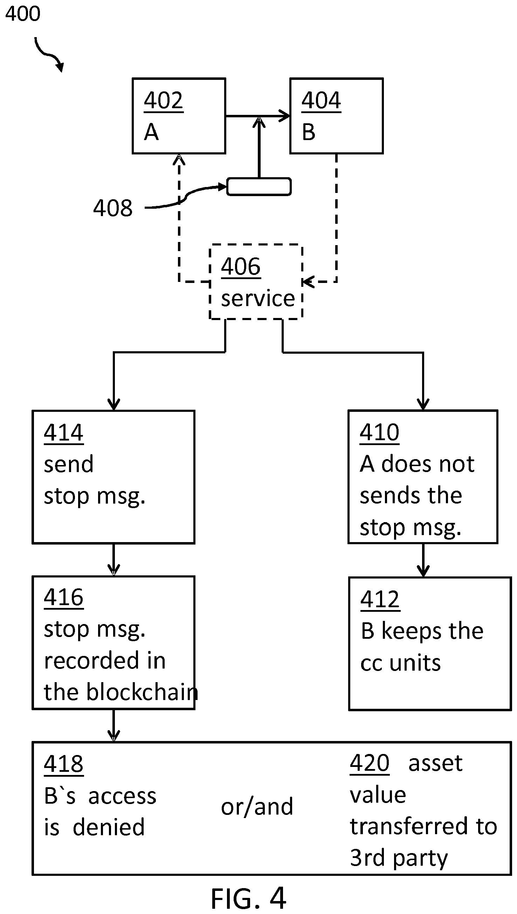

A typical example of the proposed concept technique will be discussed next. **Fig. 4** shows an order/payment/delivery process 400. It may be implemented using the proposed concept. A participant A 402 may order a service 406 from participant B 404. A certain amount of crypto-currency units may be transferred from participant A 402 to participant B 404, as transaction 408, to be recorded in the blockchain network, i.e., the distributed ledger.

Participant B 404 decides - after he has received the crypto-currency value transfer - either to deliver the service 406 or not. However, because the time period linked to the transaction 408 has not been expired yet, participant B 404 cannot access the transferred crypto-currency units using his wallet temporarily.

However, if the time period ends and participant A 402 has not send a stop message (410), participant B gets access granted to the crypto-currency units (412).

Alternatively, participant A may choose to send a stop message (414) which will be recorded, 416, in the blockchain. Participant A may do this within the time period, especially in the case he did not receive the ordered service 406. In that case, participant B access to the asset value, i.e., the crypto-currency toke, continues to be denied permanently (418).

Instead, somebody else (e.g., a miner or a content provider) will get access to the asset value. E.g., an optional new transaction can be generated automatically - and/or according to predefined rules - so that the crypto-currency units will be transferred to a third party (420). As discussed above, the third-party may also be a group of participants in the blockchain network. Alternatively, the control over the blocked access may be given to the blockchain control system for other purposes.

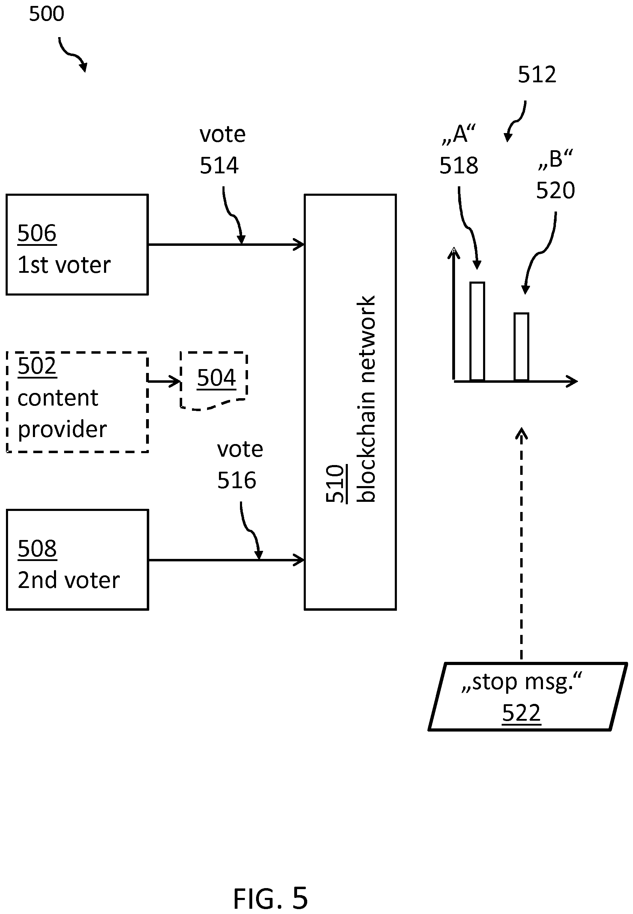

**Fig. 5** shows a block diagram of an embodiment 500 in which the proposed concept is used as a voting system. As an example, a content provider 502 may have produced a content item 504 (alternatively, the voting system may be used for any decision-making process involving a larger amount of people, see below). A plurality of voters - of which a 1st voter 506 and a 2nd voter 508 are shown explicitly - can express their approval in form of voting for "A" or for "B". The messages or votes 514, 516 may be transferred from the voters 506, 508 as senders via the blockchain network 510 to a neutral voting manager or the content provider as receiver via the blockchain network 510. A small amount of a crypto-currency may be attached to each vote. The amount of votes for "A" 518 and "B" 520 should - for simplicity reasons - be the same. However, the system may also work with different amounts for the different opinions. Also, more than two opinions are controllable using the principles of the voting system.

Over time, and at the end of the voting process an exemplary result is shown as diagram 512. As can be seen, the "A" votes 518 are more than the "B" votes 520. Hence, the "A" votes 518 represent a higher value of the crypto-currency than the "B" votes 520.

Now, the further development depends on the behavior of the content provider. If "A" was related to produce a certain result (e.g., a certain content item) and the content provider decided for producing "A" it can be assumed that a large number of stop messages 522 would be received from the "B" voters.

If, however, the content provider decides for "B" - and thereby against the voting result which marks "A" as a winner - most stop messages 522 may be received from "A" voters. Thus, for deciding against voters result, the financial benefit decreases ("B" money is less than "A" money").

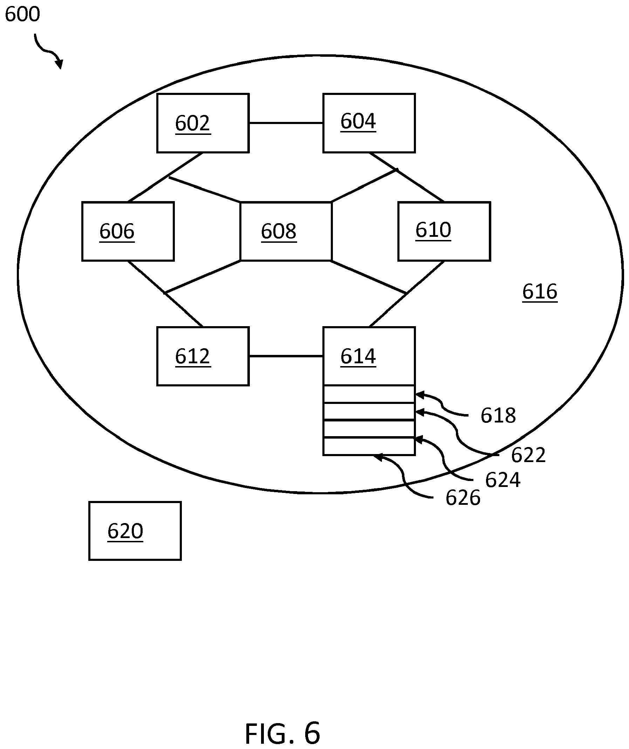

**Fig. 6** shows an embodiment of the system 600 for delaying a transaction to a recipient in a blockchain network 616. The system 600 comprises a plurality of nodes 602, 604, ..., 614 building the blockchain network 616 for managing a distributed ledger for a crypto-currency. Each of the plurality of nodes comprises a central processing unit (not shown) and a memory (not shown) coupled to the central processing unit adapted for executing program instructions.

A receiving unit 618 - exemplary shown at node 614 - is adapted for receiving a token and a time period value. The token represents an asset value in the crypto-currency - e.g., a coin - transferable from a sender 620 identifiable by a sender ID to the recipient identifiable by a receiver ID. Also here, the token and the time period value may be combined in a joint data structure, e.g., a joint token. Both may be logged in the blockchain together.

The system 600 also comprises also a confirmation unit 622 adapted for confirming an asset value transfer relating to the token in the blockchain network 616 by appending information about the asset value transfer as transaction information to a block in the blockchain network 616 and a denying unit 624 adapted for denying the recipient's access to the transferred asset value by the recipient temporarily until the time period expires. The denying unit 624 is also adapted for denying the recipient's access to the transferred asset value by the recipient permanently if a stop message is received within the time period defined by the time period value.

Last but not least, the system 600 may optionally comprise a generator 626 adapted for generating a new transaction granting access to the asset value to a third party identifiable by a third party identifier, upon receiving a stop message within the time period defined by the time period value.

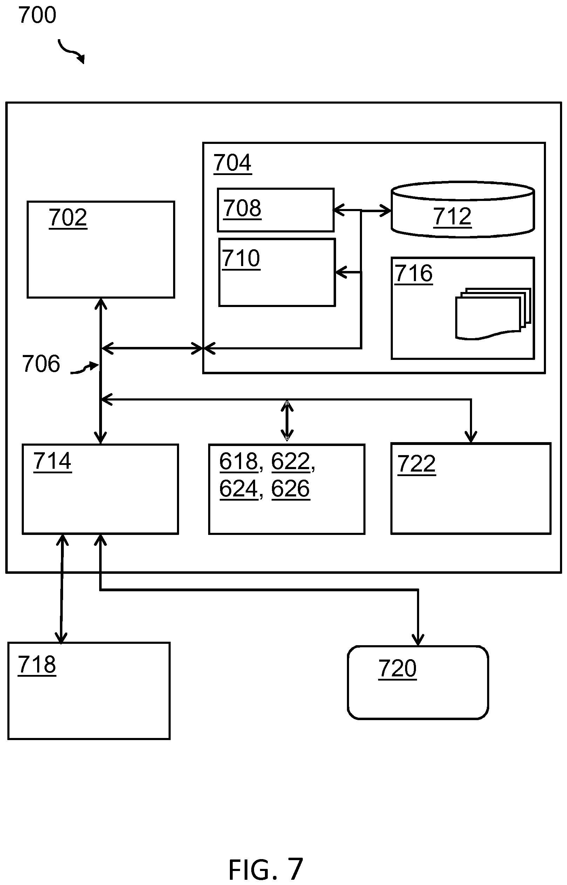

The embodiments of the proposed concept may be implemented together with virtually any type of computer - here denoted as nodes - regardless of the platform being suitable for storing and/or executing program code. **Fig. 7** shows, as an example, a computing system 700 suitable for executing program code related to the proposed method.

The computing system 700 is only one example of a suitable computer system and is not intended to suggest any limitation as to the scope of use or functionality of embodiments of the invention described herein. Regardless, the computer system 700 is capable of being implemented and/or performing any of the functionality set forth hereinabove. In the computer system 700, there are components, which are operational with numerous other general purpose or special purpose computing system environments or configurations. Examples of well-known computing systems, environments, and/or configurations that may be suitable for use with computer system 700 include, but are not limited to, tablet computers, hand-held or laptop devices, multiprocessor systems, microprocessor-based systems, programmable consumer electronics, smartphones, and digital cameras with spare computing capacity that include any of the above systems or devices, and the like. Computer system 700 may be described in the general context of computer system-executable instructions, such as program modules, being executed by a computer system 700. Generally, program modules may include routines, programs, objects, components, logic, data structures, and so on that perform particular tasks or implement particular abstract data types.

The computer system 700 is shown in the form of a general-purpose computing device. The components of computer system 700 may include, but are not limited to, one or more processors or processing units 702, a system memory 704, and a bus 718 that couples various system components including system memory 704 to the processor 702. Computer system 700 typically includes a variety of computer system readable media. Such media may be any available media that is accessible by computer system 700, and it includes both, volatile and non-volatile media, removable and non-removable media.

The system memory 704 may include computer system readable media in the form of volatile memory, such as random access memory (RAM) and/or cache memory. Computer system 700 may further include other removable/non-removable, volatile/non-volatile computer system storage media. By way of example only, storage system 712 may be provided for reading from and writing to a non-removable storage chip. Storage media can be connected to bus 706 by one or more data media interfaces. As will be further depicted and described below, memory 704 may include at least one program product having a set (e.g., at least one) of program modules 716 that are configured to carry out the functions of embodiments of the invention.

A program/utility, having a set (at least one) of program modules, may be stored in memory 704 by way of example, and not limitation, as well as an operating system, one or more application programs, other program modules, and program data. Program modules may generally carry out the functions and/or methodologies of embodiments of the invention as described herein.

The computer system 700 may also communicate with one or more external devices such as a keyboard, a pointing device, a display 720, etc.; these devices may be combined in a touch-screen that enable a user to interact with computer system 700; and/or any devices (e.g., network card, modem, etc.) that enable computer system 700 to communicate with one or more other computing devices. Such communication can occur via input/output (I/O) interfaces. Still yet, computer system 700 may communicate with one or more networks such as a local area network (LAN), a general wide area network (WAN), and/or a mobile public network (e.g., the Internet) via network adapter 722. As depicted, network adapter 714 may communicate with the other components of computer system 700 via bus 718. It should be understood that although not shown, other hardware and/or software components could be used in conjunction with computer system 700. Examples, include, but are not limited to: microcode, device drivers, redundant processing units, etc.

Additionally, parts of the system 600 for delaying a transaction to a recipient in a blockchain network may be attached to the bus system 706, in particular the receiving unit 618, confirmation unit 622, denying unit 624 and the generator 626.

The descriptions of the various embodiments of the present invention have been presented for purposes of illustration, but are not intended to be exhaustive or limited to the embodiments disclosed. Many modifications and variations will be apparent to those of ordinary skills in the art without departing from the scope and spirit of the described embodiments. The terminology used herein was chosen to best explain the principles of the embodiments, the practical application or technical improvement over technologies found in the marketplace, or to enable others of ordinary skills in the art to understand the embodiments disclosed herein.

The present invention may be embodied as a system, a method, and/or a computer program product. The computer program product may include a computer readable storage medium (or media) having computer readable program instructions thereon for causing a processor to carry out aspects of the present invention.

The medium may be an electronic, magnetic, optical, electromagnetic, infrared or a semi-conductor system for a propagation medium, like e.g., solid state memory, a random access memory (RAM), a read-only memory (ROM).

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device such as an EPROM, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to the respective computing devices, e.g., as a smartphone app from a service provider via a mobile network connection.

Computer readable program instructions for carrying out operations of the present invention may be any machine dependent or machine independent instructions, microcode, firmware instructions, state-setting data, or either source code or object code written in any combination of one or more programming languages, including an object-oriented programming language such as C++, Java or the like, and conventional procedural programming languages, such as the "C" programming language or similar programming languages. The computer readable program instructions may execute entirely on the computer device. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus', and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus', or another device to cause a series of operational steps to be performed on the computer, other programmable apparatus or other device to produce a computer implemented process, such that the instructions which execute on the computer, other programmable apparatus', or another device implement the functions/acts specified in the flowchart and/or block diagram block or blocks.

The flowcharts and/or block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or act or carry out combinations of special purpose hardware and computer instructions.

The corresponding structures, materials, acts, and equivalents of all means or steps plus function elements in the claims below are intended to include any structure, material, or act for performing the function in combination with other claimed elements, as specifically claimed. The description of the present invention has been presented for purposes of illustration and description, but is not intended to be exhaustive or limited to the invention in the form disclosed. Many modifications and variations will be apparent to those of ordinary skills in the art without departing from the scope and spirit of the invention. The embodiments are chosen and described in order to best explain the principles of the invention and the practical application, and to enable others of ordinary skills in the art to understand the invention for various embodiments with various modifications, as are suited to the particular use contemplated.

**Claims**

1. A computer-implemented method for delaying a transaction to a recipient in a blockchain network, wherein the blockchain network comprises a plurality of nodes for managing a distributed ledger for a crypto-currency, the method comprising

    - receiving a token and a time period value, the token representing an asset value in the crypto-currency transferrable from a sender identifiable by a sender identifier to the recipient identifiable by a receiver identifier,
    - confirming an asset value transfer relating to the token in the blockchain network by appending information about the asset value transfer as transaction information to a block in the blockchain network,
    - denying the recipient's access to the transferred asset value by the recipient temporarily until the time period expires,
    - upon receiving a stop message within the time period defined by the time period value, denying the recipient's access to the transferred asset value by the recipient permanently.

2. The method according to claim 1, also comprising

    - upon permanently denying the recipient's access to the transferred asset value by the recipient permanently, and

    generating a new transaction granting a third party identifiable by a third party identifier access to the asset value.

3. The method according to claim 1 or 2, wherein the third party identifier is a group of third party identifiers and wherein the access is granted to members of the group.

4. The method according to claim to any of the preceding claims, also comprising

    - receiving a service order by the recipient, the service order relating to the token.

5. The method according to any of the preceding claims, wherein the time period value is set by a sender.

6. The method according to any of the claims 1 to 3, wherein the time period value is set by the recipient.

7. The method according to any of the claims 1 to 3, also comprising

    - transmitting a plurality of potential time period values from the recipient to the sender, and
    - selecting one of the plurality of potential time period values by the sender as the time period value.

8. The method according to any of the claims 1 to 3, also comprising

    - transmitting a time period range value from the recipient to the sender, and
    - selecting a time period value from within the time period range by the sender as the time period value.

9. The method according to any of the preceding claims, wherein an end of the time period is an absolute time value or a relative time value.

10. The method according to 9, wherein the relative time values are measured in numbers of blocks of the blockchain network.

11. The method according to any of the claims 3 to 10, wherein one of the members of the group is the sender of the token.

12. The method according to any of the claims 3 to 11, wherein one of the members of the group is the recipient of the token.

13. The method according to any of the preceding claims, wherein the stop message is also recorded in the blockchain network.

14. A system for delaying a transaction to a recipient in a blockchain network, the system comprising

    - a plurality of nodes building the blockchain network for managing a distributed ledger for a crypto-currency, each of the plurality of nodes comprising a central processing unit and a memory coupled to the central processing unit adapted for executing program instructions,
    - a receiving unit adapted for receiving a token and a time period value, the token representing an asset value in the crypto-currency transferable from a sender identifiable by a sender identifier to the recipient identifiable by a receiver identifier,

- a confirmation unit adapted for confirming the asset value transfer relating to the token in the blockchain network by appending information about the asset value transfer as transaction information to a block in the blockchain network,
- a denying unit adapted for denying the recipient's access to the transferred asset value temporarily until the time period expires, and
- wherein the denying unit is also adapted for permanently denying the recipient's access to the transferred asset value permanently if a stop message is received within the time period defined by the time period value.

15. A computer program product for delaying a transaction in a blockchain network to a recipient, said computer program product comprising a computer readable storage medium having program instructions embodied therewith, said program instructions being executable by one or more computing systems or controllers to cause said one or more computing systems to

- building a network of a plurality of nodes building the blockchain network for managing a distributed ledger for a crypto-currency,
- receive a token and a time period value, the token representing an asset value in the crypto-currency from a sender identifiable by a sender identifier to the recipient identifiable by a receiver identifier,
- confirming the asset value transfer relating to the token in the blockchain network by appending information about the asset value transfer as transaction information to a block in the blockchain network,
- deny the recipient's access to the transferred asset value by the recipient until the time period expires, and

upon receiving a stop message within the time period defined by the time period value, deny recipient's access to the transferred asset value by the recipient permanently.

100

| 102 | receiving a token representing to an asset value in the crypto-currency and a time period value |

| 104 | confirming the asset value transfer in the blockchain network |

| 106 | denying access to the transferred asset value temporarily until the time period expires |

| 108 | receiving a stop message and denying access to the asset value permanently |

| 110 | granting access to the asset value to a third party |

FIG. 1

FIG. 2

FIG. 3

400

| 402<br>A | 404<br>B |
|---|---|

408

| 406<br>service |
|---|

| 414<br>send<br>stop msg. | 410<br>A does not<br>sends the<br>stop msg. |
|---|---|

| 416<br>stop msg.<br>recorded in<br>the blockchain | 412<br>B keeps the<br>cc units |
|---|---|

| 418<br>B`s access<br>is denied | or/and | 420 asset<br>value<br>transferred to<br>3rd party |
|---|---|---|

FIG. 4

500

512

vote
514

"A"
518

"B"
520

506
1st voter

502
content
provider

504

510 blockchain network

vote
516

508
2nd voter

"stop msg."
522

FIG. 5

600

602 — 604

606 608 610

616

612 — 614

618

622

624

626

620

FIG. 6

FIG. 7

Europäisches
Patentamt

European
Patent Office

Office européen
des brevets

## EUROPEAN SEARCH REPORT

Application Number

EP 18 18 3407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2018 100 482 A4 (BLACK GOLD COIN INC) 7 June 2018 (2018-06-07) * paragraph [0025] * * paragraph [0029] * * paragraph [0070] - paragraph [0071] * * paragraph [0138] - paragraph [0141] * * paragraph [0147] * * figures 5,7 * ----- | 1-15 | INV. H04L9/32 H04L29/08 G06Q20/06 G06Q20/40 |
| X | US 2018/139043 A1 (JAYACHANDRAN PRAVEEN [IN] ET AL) 17 May 2018 (2018-05-17) * paragraph [0017] - paragraph [0018] * * paragraph [0024] - paragraph [0026] * * claim 3 * ----- | 1-15 | |
| | | | TECHNICAL FIELDS SEARCHED (IPC) |
| | | | H04L G06Q |

The present search report has been drawn up for all claims

| Place of search | Date of completion of the search | Examiner |
|---|---|---|
| Munich | 4 October 2018 | Cankaya, Sukru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 3407

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2018

| Patent document cited in search report | Publication date | Patent family member(s) | Publication date |
|---|---|---|---|
| AU 2018100482 A4 | 07-06-2018 | NONE | |
| US 2018139043 A1 | 17-05-2018 | NONE | |

EPO FORM P0459

For more details about this annex : see Official Journal of the European Patent Office, No. 12/82